# FASCICULE DE BREVET EUROPEEN

(11) **EP 0 812 162 B1**
(45) Date de publication et mention de la délivrance du brevet: **17.11.1999**
(21) Numéro de dépôt: 96905901.3
(22) Date de dépôt: 01.03.1996
(51) Int. Cl.: A61C 13/30

(54) **TENON DENTAIRE A REPARTITION DIRECTIONNELLE DE LA RESISTANCE**
ZAHNSTIFT MIT DIREKTIONALER WIDERSTANDSVERSTELLUNG
TOOTH PIVOT WITH DIRECTIONAL DISTRIBUTION OF THE STRESS RESISTANCE

(30) Priorité: 01.03.1995 FR 9502362
(43) Date de publication de la demande: 17.12.1997
(73) Titulaire: Reynaud, Marc, F-38240 Meylan (FR); Reynaud, Pierre-Luc, 38120 Saint-Egrève (FR)
(72) Inventeur: REYNAUD, Marc, F-38240 Meylan (FR); REYNAUD, Pierre-Luc, F-38120 Saint-Egrève (FR); CHU, Manh, F-38120 Saint-Egrève (FR)
(74) Mandataire: Bruder, Michel
(86) Numéro de dépôt international: FR9600330
(87) Numéro de publication internationale: WO9626687

(56) Documents cités:
- EP-A- 0 385 892
- EP-A- 0 432 001
- FR-A- 2 588 181
- FR-A- 2 626 167

## Description

La présente invention concerne un tenon dentaire et plus particulièrement un tenon en matériau composite apte à contrôler la répartition directionnelle de la résistance mécanique aux contraintes qui s'exercent sur lui. La présente invention concerne également un procédé de fabrication d'un tel tenon dentaire.

On sait que lorsqu'on reconstitue une dent dépulpée, il est essentiel d'assurer la pérennité de la substance dentaire résiduelle, ce que l'on réalise habituellement au moyen de tenons métalliques, en alliage précieux ou non, qui sont vissés ou scellés dans le canal dentaire.

On sait également que les grandes différences qui existent entre les caractéristiques mécaniques de ces tenons métalliques et la dentine de la dent sont la cause de la plupart des échecs qui se produisent dans ce type d'intervention et qui se traduisent par des descellements et/ou des fêlures des racines sous l'action des contraintes importantes engendrées par les forces de mastication.

On a proposé de remédier à ces inconvénients en remplaçant les tenons métalliques par des tenons en matériau composite, essentiellement constitués de fibres de carbone disposées longitudinalement suivant l'axe du tenon qui sont noyees dans une résine durcissable. Bien que les tenons de ce type aient supprimé les principaux inconvénients associés aux tenons métalliques, ils ne sont cependant pas totalement satisfaisants car leurs caractéristiques mécaniques, et notamment leur résistance maximale aux contraintes, sont les mêmes quelles que soient les applications envisagées.

Un autre inconvénient de ce dernier tue de tenons est que, les fibres de carbone étant électriquement conductrices, le tenon peut constituer une électrode, véhicule d'une corrosion électrochimique.

Par ailleurs les tenons de ce type mettant en oeuvre des fibres de carbone sont de couleur noire ce qui limite leur utilisation dans certains cas de restauration esthétique.

Les études morphologiques effectuées sur les axes d'insertion des dents dans les maxillaires ont démontré que les angles des contraintes occlusales exercées sur celles-ci varient considérablement. En effet, lors de la mastication, les dents subissent des contraintes qui sont appliquées sur celles-ci suivant des plages angulaires variées et qui dépendent notamment des angles formés par les axes d'insertion des dents antagonistes qui se rencontrent. Ainsi, pour les dents uniradiculées, ces axes

d'insertion se confondent la plupart du temps avec les axes canalaires suivant lesquels sont insérés les tenons qui vont servir de renfort aux dents reconstituées. Pour les dents multiradiculées, et plus particulièrement pour les molaires, les axes canalaires des différentes racines étant divergents, on sait que ce ne sont plus uniquement les axes d'insertion des dents qui vont intervenir dans les contraintes subies par celles-ci mais les différentes pentes cuspidiennes, les crêtes, les fosses, autrement dit l'anatomie de la face triturante, qui vont conditionner l'angle d'application des forces occlusales auxquelles le tenon est soumis.

On connaît également par le brevet FR-A-2.626.167 un pivot pour dent comprenant un corps allongé au centre duquel est placé un fil, éventuellement en métal, qui est entouré d'une résine moulée chargée de fibres notamment enroulées à la surface externe du pivot.

La présente invention a pour but de proposer un moyen permettant de réaliser des tenons dont on peut ajuster la direction des axes privilégiés de résistance mécanique à des valeurs souhaitées, en fonction de la direction des contraintes auxquelles ils sont soumis et qui dépendent du type de dents dans lesquelles ils sont insérés.

La présente invention a ainsi pour objet un tenon dentaire en matériau composite caractérisé en ce qu'il est constitué d'une âme centrale, faite d'au moins un faisceau de fibres qui est entouré d'une gaine constituée d'au moins une couche de fibres isotropes ou non, les fibres de l'âme centrale et celles de la gaine étant noyées dans une résine durcissable, et les fibres de la gaine étant orientées d'un angle donné par rapport à l'axe longitudinal du tenon.

Dans un mode de mise en oeuvre de l'invention la gaine est constituée d'au moins deux couches superposées de fibres, disposées symétriquement par rapport à l'axe longitudinal du tenon, les deux dites couches pouvant être tissées.

Dans une variante de mise en oeuvre de l'invention la gaine est constituée d'au moins une couche de fibres transversales.

Dans un mode de mise en oeuvre de l'invention la gaine est recouverte d'une enveloppe mince comportant des cavités de rétention, cette enveloppe pouvant notamment être constituée d'une couche de fibres non jointives, et notamment des fibres unidirectionnelles longitudinales ou transversales.

La présente invention a également pour objet un procédé de fabrication d'un tenon dentaire en matériau composite, caractérisé en ce qu'il comporte les étapes consistant à :
- réaliser une âme centrale comportant au moins un faisceau de fibres longitudinales,
- disposer autour de l'âme centrale une gaine périphérique constituée d'au moins une couche de fibres orientées d'un angle donné par rapport à l'axe longitudinal du tenon,
- disposer dans un moule l'âme centrale revêtue de sa gaine, et imprégner ces deux éléments d'une résine durcissable.

On décrira ci-après, à titre d'exemple non limitatif, une forme d'exécution de la présente invention, en référence au dessin annexé sur lequel :
- la figure 1 est une vue en coupe partielle axiale et longitudinale d'un premier mode de mise en oeuvre d'un tenon suivant l'invention.
- la figure 2 est une vue en perspective partielle éclatée du tenon représenté sur la figure 1.
- la figure 3 est une vue schématique partielle de la gaine externe du tenon représenté sur les figures 1 et 2
- la figure 4 est une vue schématique partielle d'une variante de mise en oeuvre de la gaine représentée sur la figure 3.
- la figure 5 est une vue externe du tenon représenté sur les figures 1 à 4.
- la figure 6 est une vue en coupe partielle axiale et longitudinale d'un second mode de mise en oeuvre d'un tenon suivant l'invention.
- la figure 7 est une vue en perspective partielle éclatée du tenon représenté sur la figure 6.
- la figure 8 est une vue schématique partielle de la gaine externe du tenon représenté sur les figures 6 et 7.
- la figure 9 est une vue externe du tenon représenté sur les figures 6 à 8.
- la figure 10 est une vue schématique partielle d'une variante de mise en oeuvre de la gaine représentée sur la figure 8.
- la figure 11 est une vue externe d'une variante de mise en oeuvre d'un tenon suivant l'invention.

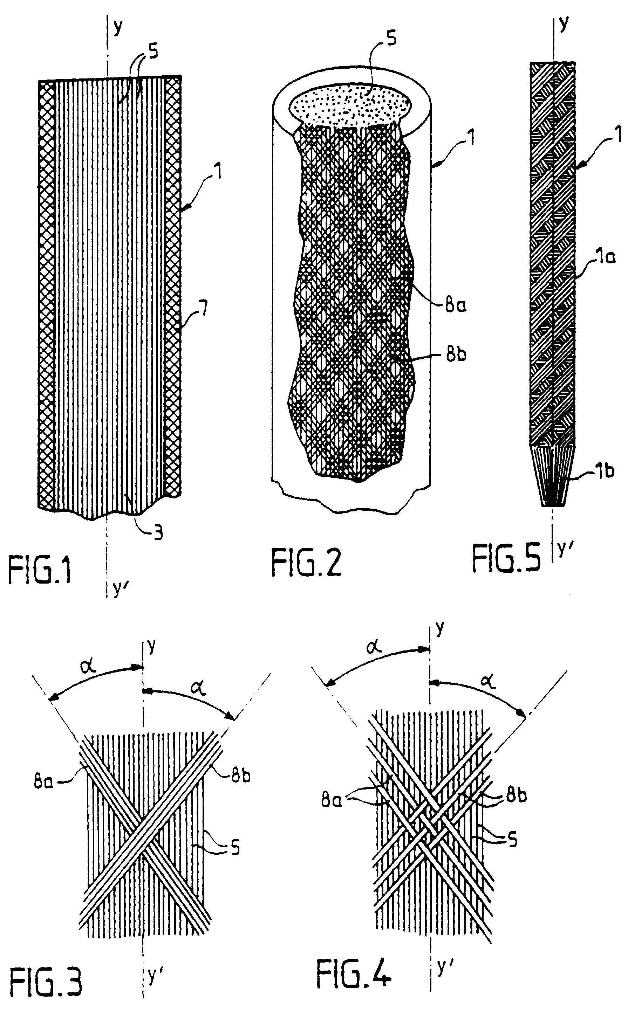

Sur la figure 1, un tenon 1 suivant l'invention est constitué d'une âme 3 formée de fibres 5 dont les caractéristiques mécaniques sont isotropes (comme par exemple les fibres de verre) ou anisotropes (comme par exemple les fibres d'aramide ou de carbone) qui sont distribuées longitudinalement suivant l'axe yy' du tenon 1, sensiblement au centre de celui-ci, et qui sont noyées dans une matrice de résine durcissable telle que, par exemple, une résine époxy.

Autour de l'âme centrale 3, le tenon 1 suivant l'invention comporte une gaine 7 constituée de fibres à caractéristiques mécaniques isotropes telles que par exemple des fibres de verre, ou des fibres à caractéristiques mécaniques anisotropes telles que des fibres d'aramide ou de carbone. Les caractéristiques des fibres constituant la gaine 7, ainsi que leur disposition à l'intérieur de celle-ci sont fonction de la direction privilégiée de la résistance aux contraintes que l'on souhaite conférer au tenon 1.

Dans un exemple de mise en oeuvre d'un premier type de tenon suivant l'invention, l'âme centrale 3 est formée de fibres isotropes 5, à savoir des fibres de verre, d'un diamètre D1=14 µm et qui représentent 50% du volume global de celui-ci.

La gaine periphérique 7, ainsi que représenté sur les figures 2 et 3, est quant à elle constituée de deux séries de fibres de verre respectivement 8a et 8b de diamètre D2=10 µm, qui sont disposées symétriquement par rapport à l'axe yy' du tenon 1 et qui forment par rapport à celui-ci des angles α de 40°, à savoir une première série de fibres 8a qui sont enroulées autour de l'âme centrale 3, et une deuxième série de fibres 8b, de qualité identique à la première, et qui sont enroulées sur celles-ci. Ces deux séries de fibres symétriques représentant un volume global d'environ 32% de celui du tenon 1.

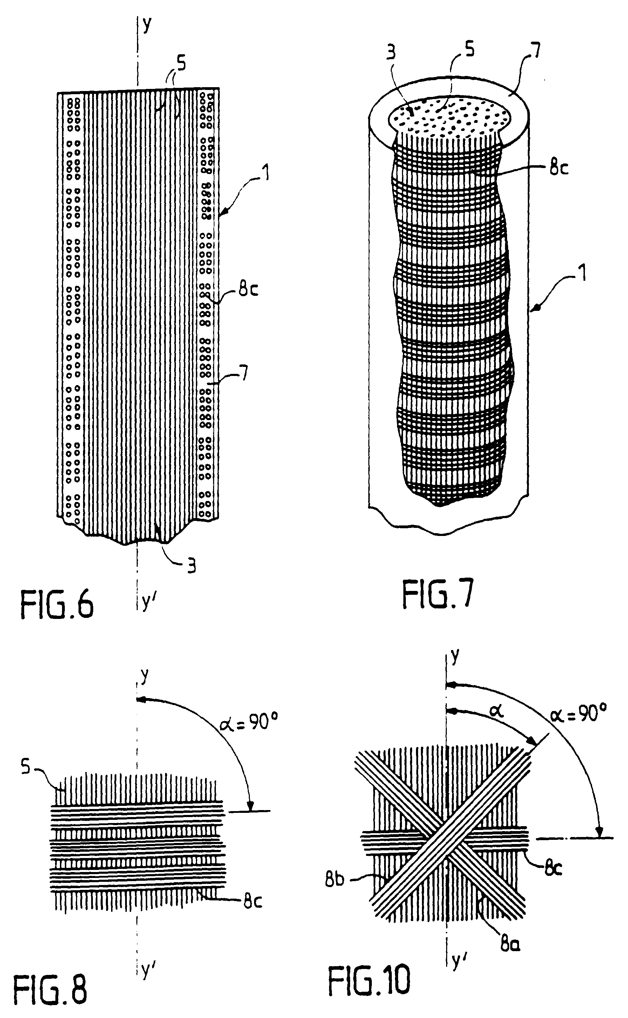

La forme caractéristique du tenon 1, ainsi que représenté sur la figure 5, à savoir un corps constitué d'une partie cylindrique 1a suivie d'une partie tronconique 1b est obtenue par usinage, et notamment par tournage, de la gaine externe 7.

Un tel tenon présente les caractéristiques mécaniques suivantes (où β représente l'angle de la sollicitation par rapport à l'axe longitudinal du tenon) :
- résistance à la traction longitudinale (β=0°) 1200 MPa
- résistance à la traction transversale (β=90°) 810 MPa
- module d'élasticité longitudinal en traction 41 GPa

La présente invention permet de modifier les résistances à la traction longitudinale et transversale du tenon 1 par la simple variation de l'angle α suivant lequel les fibres 8a et 8b de la gaine externe 7 sont enroulées sur l'âme 3.

On a ainsi réalisé un tenon 1 du même type dont toutes les caractéristiques des fibres ainsi que leur disposition sont identiques aux valeurs de celles utilisées dans l'exemple précédent, mais dans lequel l'inclinaison α des fibres 8a et 8b de la gaine externe 7 est plus faible et a une valeur de 25°.

Les caractéristiques mécaniques d'un tel tenon sont alors les suivantes :
- résistance à la traction longitudinale (β =0°) 1310 MPa
- résistance à la traction transversale (β=90°) 690 MPa
- module d'élasticité longitudinal en traction 49 GPa

On constate ainsi que ce second tenon 1 présente une meilleure résistance à la traction dans le sens longitudinal que le premier, alors que sa résistance à la traction transversale est plus faible. Le second tenon est ainsi davantage approprié à une utilisation en relation avec des canaux dentaires, ou des cavités de dents, dans lesquels la direction préférentielle des contraintes est essentiellement longitudinale. Tel est notamment le cas lorsque l'on fixe le tenon dans des deuxièmes prémolaires.

Par contre lorsque les efforts ont une composante préférentielle transversale, le premier tenon est plus efficace que le second. Tel est notamment le cas lorsque l'on fixe le tenon dans des incisives ou des canines.

Ainsi que représenté sur la figure 4, on peut également utiliser pour constituer la gaine 7, des fibres 8a et 8b qui forment une nappe tissée, l'angle α formé par ces fibres avec l'axe longitudinal yy' du tenon 1 étant déterminé ainsi qu'exposé précédemment. Cette nappe peut être tissée autour de l'âme centrale ou, préférablement, être réalisée au préalable de façon à constituer une gaine dans laquelle on introduit l'âme centrale.

On a représenté sur les figures 6 à 9 une variante de mise en oeuvre d'un tenon suivant l'invention destinée à constituer un tenon intradentinaire, c'est à dire un tenon qui est soumis à des contraintes qui sont essentiellement perpendiculaires à son axe longitudinal.

Ce tenon 1 est également constitué d'une âme 3 formée de fibres de quartz 5 de diamètre D3=9 µm qui sont noyées dans une matrice de résine époxy et qui représentent environ 35% du volume global du tenon 1.

La gaine 7 est également constituée de fibres de quartz 8c de même diamètre, qui sont enroulées sur l'âme 3 perpendiculairement à l'axe longitudinal yy' de celle-ci (α = 90°) et qui occupent environ 40% du volume global du tenon 1.

Les caractéristiques mécaniques d'un tel tenon sont les suivantes :
- résistance a la traction longitudinale (β=0°) 1050 MPa
- résistance à la traction transversale (β=90°) 950 MPa
- module d'élasticité longitudinal en traction 45 GPa

On constate que ce tenon présente une résistance mécanique à la traction dans le sens transversal très voisin de sa résistance à la traction dans le sens longitudinal, ce qui le rend particulièrement apte à la constitution de tenons intradentinaires.

On peut également, ainsi que représenté sur la figure 10, réaliser une gaine 7 constituée de trois couches de fibres, à savoir une première couche constituée de fibres transversales 8c (α= 90°), recouverte de deux couches 8a et 8b symétriques par rapport à l'axe longitudinal yy' du tenon et qui forment par rapport à celui-ci des angles donnés α de 45°.

L'âme 3 de ce tenon est formée des mêmes fibres utilisées dans l'exemple précédent, les volumes de l'âme 3 et de la gaine 7 représentant respectivement 35% et 40% du volume global du tenon 1.

Dans cet exemple, le volume des fibres transversales est d'environ 20% du volume global du tenon 1.

Les caractéristiques mécaniques d'un tel tenon sont les suivantes :
- résistance à la traction longitudinale (β=0°) 1300 MPa
- résistance à la traction transversale (β=90°) 930 MPa
- module d'élasticité longitudinal en traction 47 GPa

Ce mode de mise en oeuvre a permis, comme représenté sur le tableau précédent, d'améliorer la résistance à la traction longitudinale (cette résistance à la traction est passée de 1050 MPa à 1300 MPa) tout en ne diminuant que d'une faible valeur la résistance à la traction transversale (celle-ci est passée de 950 MPa à 930 MPa).

On peut bien entendu utiliser, pour constituer la gaine périphérique 7 du tenon 1 des fibres possédant des caractéristiques mécaniques anisotropes, telles que par exemple des fibres d'aramide. On a ainsi remplacé, dans un tenon constitué ainsi que décrit dans l'exemple 1, les fibres de verre de la gaine externe par des fibres d'aramide. Les caractéristiques mécaniques du tenon ainsi obtenu sont les suivantes :
- résistance à la traction longitudinale (β=0°)1280 MPa
- résistance à la traction transversale (β=90°)750 MPa
- module d'élasticité longitudinal en traction 55 GPa

Le mode de mise en oeuvre est particulièrement intéressant pour des applications dans lesquelles la résistance longitudinale est la caractéristique majeure, ce qui est notamment le cas pour les tenons radiculaires.

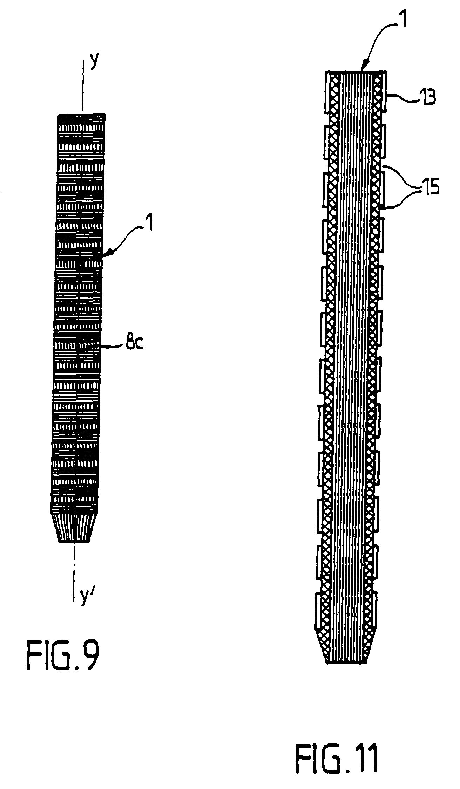

Ainsi que représenté sur la figure 11, et afin de faciliter l'adhésion des tenons suivant l'invention avec les ciments utilisés en art dentaire, on peut créer en surface de ceux-ci, dans la gaine 7, des macro-rétentions, notamment par usinage, et plus particulièrement par tournage ou décolletage. Afin d'éviter de détériorer la gaine 7, ce qui aurait pour effet de modifier les caractéristiques mécaniques du tenon, on surmoule celle-ci avec une enveloppe de résine 13 de faible épaisseur, par exemple de l'ordre de quelques dixièmes de millimètres, et l'on crée dans cette résine les macro-rétentions, par exemple des gorges circulaires.

Lorsque le faible diamètre de certains tenons, tels que par exemple les tenons intradentinaires, rend quasi impossible une telle mise en oeuvre, on réalise l'enveloppe au moyen de fibres unidirectionnelles, longitudinales ou transversales, dans laquelle on vient usiner les macro-rétentions 15.

Outre la maîtrise des directions de plus grande résistance des tenons en matériau composite, la présente invention permet également d'améliorer leur caractère esthétique. En effet elle permet de faire appel à des matériaux intéressants, notamment par leur couleur, mais dont les qualités mécaniques sont insuffisantes pour constituer un tenon dentaire, dans la mesure où les caractéristiques de l'âme de ce tenon permettent de compenser celles de la gaine.

Un tel tenon peut par exemple être obtenu en réalisant une âme centrale comportant au moins un faisceau de fibres longitudinales, en disposant autour de l'âme centrale une gaine périphérique constituée d'au moins une couche de fibres orientées d'un angle donné par rapport à l'axe longitudinal du tenon, en disposant dans un moule l'âme centrale revêtue de sa gaine, et en imprégnant ces deux éléments d'une résine durcissable.

## Revendications

1. Tenon dentaire en matériau composite du type comportant une âme centrale (3) qui est entourée d'une gaine (7) constituée d'une résine durcissable dans laquelle sont noyées des fibres orientées d'un angle donné (α) par rapport à l'axe longitudinal (yy') du tenon, caractérisé en ce que l'âme centrale (3) est constituée d'au moins un faisceau de fibres (5) noyé dans ladite résine durcissable et les fibres de la gaine forment au moins une couche.

2. Tenon suivant la revendication 1 caractérisé en ce qu'au moins un faisceau des fibres constituant l'âme du tenon (1) est formé de fibres longitudinales.

3. Tenon suivant l'une des revendications 1 ou 2 caractérisé en ce que la gaine (7) comprend au moins deux couches superposées de fibres (8a,8b) disposées symétriquement par rapport à l'axe (y,y')longitudinal du tenon (1).

4. Tenon suivant l'une des revendications précédentes caractérisé en ce que les fibres (8a,8b) forment un angle (α) compris entre 30° et 45° avec l'axe longitudinal (yy') du tenon (1).

5. Tenon suivant l'une des revendications 3 ou 4 caractérisé en ce que les dites couches (8a,8b) sont tissées.

6. Tenon suivant l'une quelconque des revendications précédentes caractérisé en ce que la gaine (7) comprend au moins une couche de fibres transversales (8c).

7. Tenon suivant l'une quelconque des revendications précédentes caractérisé en ce que le tenon (1) est pourvu sur sa périphérie de moyens de rétention (15).

8. Tenon suivant la revendication 7 caractérisé en ce que les moyens de rétentions sont réalisés dans la gaine (7).

9. Tenon suivant la revendication 7 caractérisé en ce que la gaine (7) est recouverte d'une enveloppe mince (13) comportant des cavités de rétention.

10. Tenon suivant la revendication 9 caractérisé en ce que l'enveloppe est constituée d'une couche de fibres unidirectionnelles longitudinales.

11. Procédé de fabrication d'un tenon dentaire en matériau composite, du type comportant les étapes consistant à réaliser une âme centrale, à disposer autour de celle-ci une gaine périphérique constituée de fibres orientées d'un angle donné (α) par rapport à l'axe longitudinal (yy') du tenon (1), caractérisé en ce qu'il consiste à réaliser l'âme centrale de façon qu'elle comporte au moins un faisceau de fibres longitudinales, à réaliser la gaine périphérique de façon qu'elle forme au moins une couche de fibres et à disposer dans un moule l'âme centrale revêtue de sa gaine, et imprégner ces deux éléments d'une résine durcissable.

## Claims

1. Dental pivot made of composite material of the type comprising a central core (3) which is surrounded by a sheath (7) constituted by a hardenable resin in which are embedded fibers oriented by a given angle (α) with respect to the longitudinal axis (yy') of the pivot, characterized in that the central core (3) is constituted by at least one bundle of fibers (5) embedded in said hardenable resin and the fibers of the sheath form at least one layer.

2. Pivot according to Claim 1, characterized in that at least one bundle of the fibers constituting the core of the pivot (1) is formed by longitudinal fibers.

3. Pivot according to one of Claims 1 or 2, characterized in that the sheath (7) comprises at least two superposed layers of fibers (8a, 8b) disposed symmetrically with respect to the longitudinal axis (y, y') of the pivot (1).

4. Pivot according to one of the preceding Claims, characterized in that the fibers (8a, 8b) form an angle (α) included between 30° and 45° with the longitudinal axis (yy') of the pivot (1).

5. Pivot according to one of Claims 3 or 4, characterized in that said layers (8a, 8b) are woven.

6. Pivot according to any one of the preceding Claims, characterized in that the sheath (7) comprises at least one layer of transverse fibers (8c).

7. Pivot according to any one of the preceding Claims, characterized in that the pivot (1) is provided on its periphery with retention means (15).

8. Pivot according to Claim 7, characterized in that the retention means are produced in the sheath (7).

9. Pivot according to Claim 7, characterized in that the sheath (7) is coated with a thin envelope (13) comprising retention cavities.

10. Pivot according to Claim 9, characterized in that the envelope is constituted by a layer of longitudinal unidirectional fibers.

11. Method for manufacturing a dental pivot of composite material of the type comprising the steps consisting in producing a central core, in arranging therearound a peripheral sheath constituted by fibers oriented by a given angle (α) with respect to the longitudinal axis (yy') of the pivot (1), characterized in that it consists in producing the central core so that it comprises at least one bundle of longitudinal fibers, in producing the peripheral sheath so that it forms at least one layer of fibers, and in arranging the central core coated with its sheath in a mould, and impregnating these two elements with a hardenable resin.

## Patentansprüche

1. Zahnstift aus Compositwerkstoff vom Typ, aufweisend einen zentralen Kern (3), der von einer Hülle (7) umgeben ist, die aus einem härtbaren Harz gebildet ist, in welchem Fasern versenkt sind, die in einem gegebenen Winkel (α) bezogen auf die Längsachse (yy') des Zahnstifts ausgerichtet sind,
dadurch gekennzeichnet, daß der zentrale Kern (3) aus mindestens einem Faserbündel (5) gebildet ist, das in dem härtbaren Harz versenkt ist, und die Fasern der Hülle mindestens eine Schicht bilden.

2. Zahnstift nach Anspruch 1,
dadurch gekennzeichnet, daß mindestens ein Bündel der Fasern, die den Kern des Zahnstifts (1) bilden, aus Längsfasern gebildet ist.

3. Zahnstift nach Anspruch 1 oder 2,
dadurch gekennzeichnet, daß die Hülle (7) mindestens zwei übereinanderliegende Faserschichten (8a, 8b) aufweist, die symmetrisch bezogen auf die Längsachse (y, y') des Zahnstifts (1) angeordnet sind.

4. Zahnstift nach einem der vorhergehenden Ansprüche,
dadurch gekennzeichnet, daß die Fasern (8a, 8b) einen Winkel (α) zwischen 30° und 45° mit der Längsachse (yy') des Zahnstifts (1) bilden.

5. Zahnstift nach Anspruch 3 oder 4,
dadurch gekennzeichnet, daß die Schichten (8a, 8b) gewebt sind.

6. Zahnstift nach einem der vorhergehenden Ansprüche,
dadurch gekennzeichnet, daß die Hülle (7) mindestens eine Schicht (8c) aus Querfasern aufweist.

7. Zahnstift nach einem der vorhergehenden Ansprüche,
dadurch gekennzeichnet, daß der Zahnstift (1) an seinem Umfang mit Haltemitteln (15) versehen ist.

8. Zahnstift nach Anspruch 7,
dadurch gekennzeichnet, daß die Haltemittel in der Hülle (7) ausgeführt sind.

9. Zahnstift nach Anspruch 7,
dadurch gekennzeichnet, daß die Hülle (7) von einem dünnen Mantel (13) bedeckt ist, der Halteaufnahmen aufweist.

10. Zahnstift nach Anspruch 9,
dadurch gekennzeichnet, daß der Mantel aus einer Schicht von unidirektionalen Längsfasern gebildet ist.

11. Verfahren zur Herstellung eines Zahnstifts aus Compositwerkstoff, welches Verfahren vom Typ ist, der die Schritte aufweist, die darin bestehen, einen zentralen Kern auszuführen, um diesen zentralen Kern eine periphere Hülle anzuordnen, die aus Fasern gebildet ist, die in einem gegebenen Winkel (α) bezogen auf die Längsachse (yy') des Zahnstifts (1) ausgerichtet sind,
dadurch gekennzeichnet, daß es darin besteht, den zentralen Kern derart auszuführen, daß er mindestens ein Längsfaserbündel aufweist, die periphere Hülle derart auszuführen, daß sie mindestens eine Faserschicht bildet und in einer Form den mit seiner Hülle überzogenen zentralen Kern anzuordnen, und diese beiden Elemente mit einem härtbaren Harz zu imprägnieren.
